# EUROPEAN PATENT SPECIFICATION

(11) **EP 1 700 664 B1**
(45) Date of publication and mention of the grant of the patent: **03.06.2009**
(21) Application number: 06251291.8
(22) Date of filing: 10.03.2006
(51) Int. Cl.: B23K 9/127

(54) **Welding wire aiming position control method and position control apparatus**
Verfahren und Vorrichtung zur Steuerung der Zielposition eines Schweißdrahtes
Méthode et appareil pour contrôler le pointage d'un fil de soudage

(30) Priority: 10.03.2005 JP 2005066934
(43) Date of publication of application: 13.09.2006
(73) Proprietor: Central Motor Wheel Co., Ltd., Anjo-shi, Aichi 446-0004 (JP); KAWASAKI JUKOGYO KABUSHIKI KAISHA, Kobe shi, Hyogo 650-8670 (JP)
(72) Inventor: Suzuki, Yukimitsu, c/o Central Motor Wheel Co. Ltd, Anjo-shi Aichi 446-0004 (JP); Arita, Ichiro c/o Central Motor Wheel Co., Ltd., Anjo-shi Aichi 446-0004 (JP); Yamasumi, Satoru, Itami-shi Hyogo 664-0001 (JP); Iizuka, Takahisa, Noda-shi Chiba 278-0022 (JP)
(74) Representative: Price, Nigel John King

(56) References cited:
- EP-A- 1 495 827
- DE-A1- 19 754 857
- PATENT ABSTRACTS OF JAPAN vol. 1995, no. 05, 30 June 1995 (1995-06-30) -& JP 07 051857 A (KAWASAKI HEAVY IND LTD), 28 February 1995 (1995-02-28)
- PATENT ABSTRACTS OF JAPAN vol. 2000, no. 15, 6 April 2001 (2001-04-06) -& JP 2000 351072 A (KAWASAKI HEAVY IND LTD), 19 December 2000 (2000-12-19)
- PATENT ABSTRACTS OF JAPAN vol. 2002, no. 10, 10 October 2002 (2002-10-10) -& JP 2002 160088 A (RC SYSTEM:KK), 4 June 2002 (2002-06-04)

## Description

The present invention relates to a wire aiming position control method and position control apparatus in a consumable electrode type arc welding method.

### DESCRIPTION OF THE RELATED ART

A welding wire is packed or passed through a wire guide conduit. Therefore, by passing a pack or a wire guide conduit, a wire has a twist and is fed from a tip. That is, a welding wire coming out from a tip is twisted and fed while being rotated owing to a clearance between an inner diameter of the tip and an outer diameter of the welding wire and the twist of the welding wire. Therefore, there poses a problem that arc is not generated at a predetermined aiming position of a welded member and stable arc start and uniform bead shape are not constituted. Further, also a welding wire taken out from a wire pack or a reel has a twist, and still further twist of the wire is changed by a wire path from the pack to a torch, a wire front end portion is changed when fed from a tip front end and therefore, it is very difficult to feed the front end position of the welding wire accurately to the aiming position.

When the front end portion of the welding wire cannot accurately be fed to the aiming position, in thin plate welding, the aiming position is shifted and it is difficult to ensure proper welding quality, further, twisting of the welding wire is changed by a condition of a lot of producing the wire or the like and therefore, it is difficult to predict a twist. Hence, there is proposed an arc welding torch capable of generating arc at a predetermined aiming position (refer to, for example, Patent Reference 1) . That is, a torch described in Patent Reference 1 is provided with a plurality of pieces of curves as a wire guide path, and a rotation hampering torque is set to be larger than a torsional yield torque of a welding wire by a friction force by radii of curvature and circular arc angles of the respective curves and an elastic force of the welding wire brought into contact therewith. Therefore, when a rotational torque is operated to the welding wire, the welding wire itself is twisted to absorb a rotational displacement to prevent the welding wire from being rotated at inside of the wire guide path of the torch. Thereby, a front end of the welding wire is made to be disposed always at the same position relative to a power feeding tip and arc is generated at a predetermined aiming position.

Meanwhile, there is a case in which a tip is deformed by being interfered with a welded member, a fixing jig or the like. When a degree of the deformation is large, a processing of interchanging of the torch or reinstruction or the like is carried out. Further, when the degree of the deformation is small, there is a case in which welding is carried out by only confirming an aiming position of the front end of the welding wire. Therefore, there is a concern that welding under a predetermined condition is not carried out by a change in wire extension or a change in torch angle and it is difficult to ensure stable welding quality.

There is a related art for detecting an amount of shifting a position of a front end of a torch when interfered with an object of the torch, a jig or the like (refer to, for example, Patent Reference 2). That is, by using a torch position detecting apparatus (comprising two independent detectors for operating a specified position of the torch and a determiner inputting an output of the detectors), a time period of adjusting a wire extension length is dispensed with. Therefore, there can be deleted a time period required for adjusting the wire extension length when the torch position is detected by touch sensing of the welding wire to resolve a problem that detection accuracy is deteriorated by a change in the wire extension length in the touch sensing.
[Patent reference 1] JP-A-9-29441
[Patent reference 2] JP-A-11-216565

However, according to the constitution described in Patent Reference 1, although twisting of the wire is corrected at inside of the torch, there is a concern that when a hole at the front end of the tip is worn, the aiming position is shifted. Further, according to the constitution described in Patent Reference 2, for example, a limit switch is utilized as a detector. Therefore, there is a concern that a measurement error is produced by an error by attaching sputter to the torch as well as an error by the limit switch or the like.

JP-07-051857 discloses a wire aiming position control method comprising the steps: (a) sensing position of a wire front end; (b) calculating a wire displacement constituting a distance between said position and an imaginary position; and (c) correcting at least either one of the welding wire and a welded member by an amount of the wire displacement along the extension plane.

DE 197 54 857 A1 discloses that the vertical shift of the wire end position should be taken into account when correcting the welding path.

### SUMMARY OF THE INVENTION

The invention has been carried out in order to resolve the drawback of the related art and it is an object thereof to provide wire aiming position control method and position control apparatus capable of accurately feeding a welding wire to an aiming position of a welded member regardless of a change in an amount of twisting the wire and a change in an amount of wearing a tip. Further, it is an object of the invention to provide the aiming position control method and position control apparatus capable of accurately ensuring an aiming position of a torch and capable of ensuring stable welding quality even in thin plate welding by enabling accurate reproduction of a welding condition including a torch angle.

Hence, according to the invention, there is provided a wire aiming position control method comprising the steps of calculating an intersection (K1) of a linear line (L1) connecting a front end center of a tip and a wire front end and an extension plane (L2) including an imaginary aiming position (K) disposed at a predetermined position, calculating a wire displacement (C) constituting a distance between the intersection (K1) and the imaginary aiming position (K), and correcting at least either one of the welding wire (W) and a welded member by an amount of the wire displacement (C) along the extension plane (L2), wherein the extension plane (L2) is orthogonal to a center line (L) of the tip, the imaginary aiming position (K) is determined as a front end position of a calibrating needle mounted to a torch, the wire front end is made to constitute a wire center position at an upper end position of a melted oxidized ball and the front end center of the tip is made to constitute a wire center position at a lower end position of the tip.

According to the wire aiming position control method, the wire displacement constituting the distance between the intersection and the imaginary aiming position can be calculated by calculating the intersection of the linear line connecting the front end center of the tip and the wire front end and the extension plane including the imaginary aiming position. The wire displacement is an accurate displacement of a front end position of the welding wire and by correcting by the amount of the displacement, the welding wire can accurately be fed to the aiming position (welding position) of the welded member. That is, even when an amount of twisting the welding wire is changed for packing or in passing a guide conduit, the twisted amount can be predicted and the wire displacement can accurately be operated. Therefore, the welding wire can accurately be fed to the aiming position of the welded member regardless of a change in the wire twisting amount. In this way, according to the wire aiming position control method, the welding wire can accurately be fed to the aiming position of the welded member and the welded portion can be maintained constant even in thin plate welding or the like. As a result, a stable bonding strength can be ensured and quality of the welded portion can be stabilized. Further, since two points of the front end center of the tip and the wire front end are detected, the detection and calculation of the displacement can be carried out in a short period of time and a time period of welding operation can be shortened.

According to the invention, there is provided a wire aiming position control apparatus comprising: first operating means for operating an imaginary aiming position (K) constituting a predetermined position; second operating means for calculating an intersection (K1) of a linear line (L1) connecting a front end center of a tip and a wire front end and an extension plane (L2) including the imaginary aiming position (K) and calculating a wire displacement (C) constituting a distance between the intersection (K1) and the imaginary aiming position (K); and correcting means for correcting a feeding position of a welding wire (W) by moving at least one of the welding wire (W) and a welded member by a calculated amount of the wire displacement (C) along the extension plane (L2), wherein the extension plane (L2) is orthogonal to a center line (L) of the tip, the wire front end is made to constitute a wire center position at an upper end position of a melted oxidized ball and wherein a front end center of the tip is made to constitute a wire center position at a lower end position of the tip.

According to the wire aiming position control apparatus of the invention, by the first operating means, the imaginary aiming position of the predetermined position can be operated, further, by the second operating means, the wire displacement constituting the distance between the intersection (the intersection of the linear line connecting the front end center of the tip and the wire front end and the extension plane) and the imaginary aiming position can be calculated, further, by the correcting means, the position of feeding the welding wire can be corrected by the calculated amount of the wire displacement. That is, the wire displacement is an accurate displacement of the front end position of the welding wire and by correcting by the amount of the wire displacement, the welding wire can accurately be fed to the aiming position of the welded member. Therefore, when the wire aiming position control apparatus is used, even when the amount of twisting the welding wire is changed for packing or in passing a guide conduit, the twisting amount can be measured and the wire displacement can accurately be operated. Therefore, the welding wire can accurately be fed to the aiming position of the welded member and a depth of melting the welded portion can be maintained constant even in thin plate welding or the like. As a result, the stable bonding strength can be ensured and the quality of the welded portion can be stabilized. Further, since two points of the front end center of the tip and the wire front end are detected, detection and calculation of the displacement can be carried out in a short period of time and a time period of the welding operation can shortened.

### BRIEF DESCRIPTION OF THE DRAWINGS

FIG. 1, is a front view enlarging an essential portion of an embodiment of a wire aiming position control apparatus according to the invention;
FIGS. 2A and 2B are schematic views of a wire aiming position measuring apparatus;
FIG. 3 is a simplified block diagram of the wire aiming position control apparatus;
FIG. 4 is a flowchart diagram showing a wire aiming position control method according to the invention;
FIG. 5 is a flowchart diagram of a method of calculating a torch position displacement by using the wire aiming position control apparatus according to the invention;
FIG. 6 is a simplified view of a control portion for calculating the torch position displacement; and
FIG. 7 is a simplified view of a torch showing a method of calculating the torch position displacement by the wire aiming position control apparatus according to the invention.

### DETAILED DESCRIPTION OF THE PREFERRED EMBODIMENTS

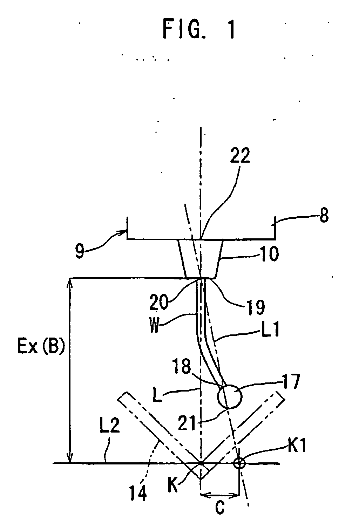

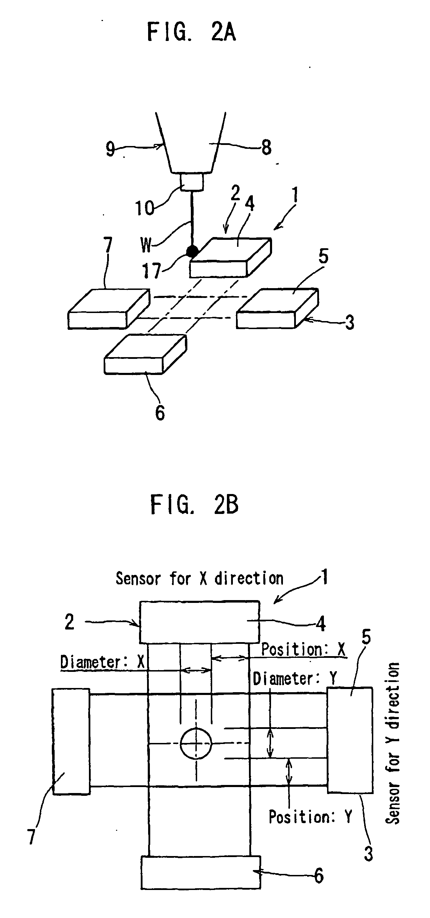

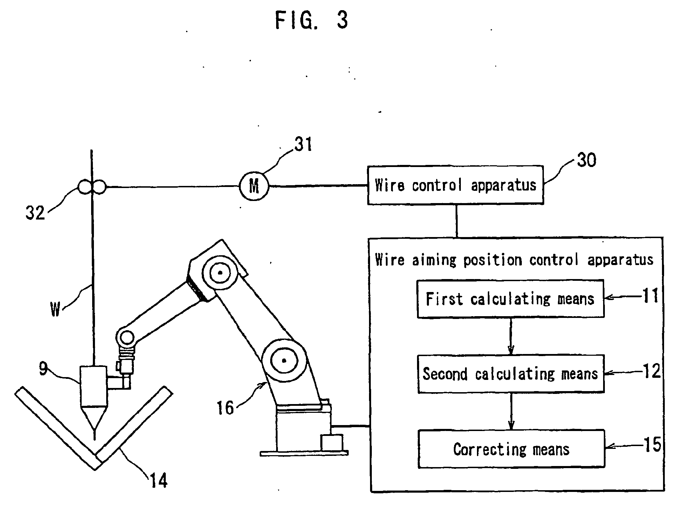

Next, a detailed explanation will be, given of specific embodiments of a wire aiming position control method and a wire aiming poison control apparatus according to the invention as follows. FIGS. 2A and 2B are schematic views of a wire aiming position measuring apparatus. The wire aiming position measuring apparatus is provided with wire front end position measuring means 1, a wire front end position measured by the wire front end position measuring means 1 is operated by comparing data measured by a laser sensor and Z direction displacement data of a welding robot 16 (refer to FIG. 3) with master data, and deviation amount (displacement difference) data is transmitted to a robot controller to correct to a set imaginary aiming position, K (refer to FIG. 1). In this case, the wire front end position measuring means 1 comprises a pair of laser sensors 2, 3 and the respective laser sensors 2, 3 include laser projectors 4, 5 and laser receivers 6, 7. Further, a data operation apparatus and the robot controller are not illustrated.

Further, as shown by FIG. 1, the wire aiming position control apparatus is provided with first operating means 11 (refer to FIG. 3) for operating a reference value (master data) of the imaginary aiming position K, second operating means (displacement operating means) 12 for calculating a wire displacement C relative to the imaginary aiming position K and correcting means 15 for correcting a position of feeding a welding wire w by an amount of the wire displacement C. That is, a front end (tip) of an arm of the welding robot 16 is attached with a torch 9, welding is carried out while moving the torch 9 as instructed by operating the arm by robot control means, when the position of feeding the welding wire W is shifted from the imaginary aiming position K, the shift is corrected. Incidentally, the imaginary aiming position K is a point disposed at a predetermined position and a plane including the imaginary aiming position K is referred to as an extension plane L2. In this case, the extension plane L2 is orthogonal to a center line L of a tip 10. Further, the second operating means 12 calculates the wire displacement C which is a distance between an intersection K1 (an intersection of a linear line L1 connecting a center of a front end of the tip 10 and a front end of the wire and the extension plane L2) and the imaginary aiming position K. Further, the torch 9 comprises a nozzle 8 and the tip 10 arranged at a front end of the nozzle 8. Further, the welding wire W is supplied to the torch 9 by way of a wire control apparatus 30. In FIG. 3, numeral 31 designates a feeding motor and numeral 32 designates a feeding roll.

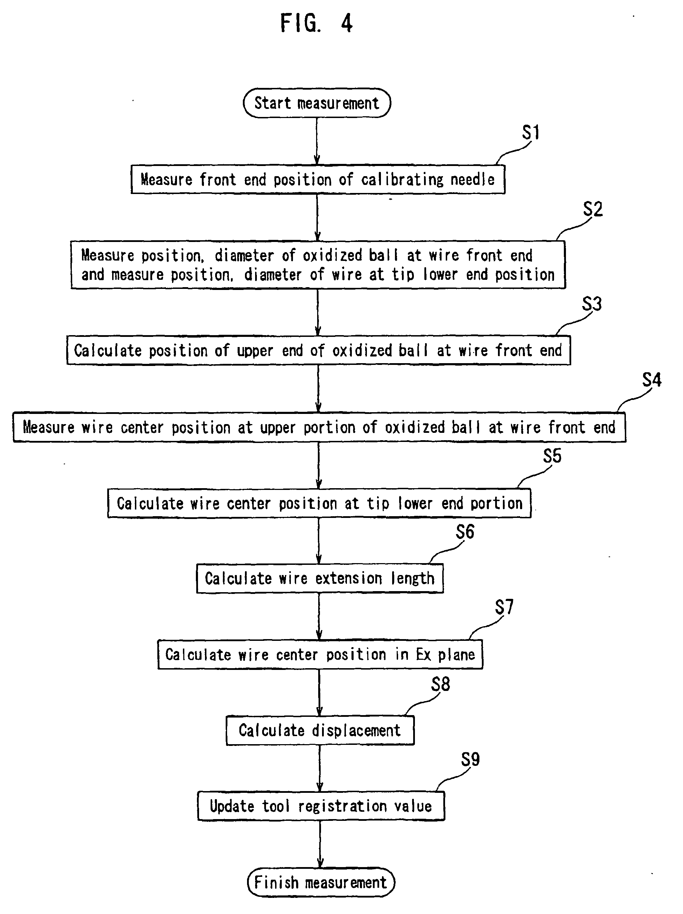

An explanation will be given of a wire aiming position control method using the wire control apparatus in reference to a flowchart of FIG. 4. In this case, as shown by FIG. 1, a melted oxidized ball 17 is formed at a front end of the welding wire W. First, the imaginary aiming position K is measured by using a calibrating needle and the imaginary aiming position K is made to constitute wire front end position master data (step S1). At this occasion, the imaginary aiming position K becomes a tool registration value in the master data. That is, according to the step, measurement is carried out before starting the operation or in daily check and the imaginary aiming position K is preserved as master data. Next, by the wire front end position measuring means 1, a position and a diameter (outer diameter) dimension of the melted oxidized ball 17 as well as a position and a diameter (outer diameter) dimension of the wire at a lower end position 19 of the tip 10 are measured by a Z direction coordinate value in inserting the robot and an outer shape of the wire as a shadow thereof and a position to the shadow by moving down the robot 16 at constant speed within a measuring range of a pair of the laser sensors in X and Y directions (step S2). Next, the operation proceeds to step S3 and calculates an upper end position of the melted oxidized ball 17 from a position at which the outer diameter of the welding wire W is changed. Thereafter, the operation proceeds to step S4 and calculates a wire center position 18 at a position of an upper end of the melted oxidized ball 17. That is, the position of the upper end of the melted oxidized ball 17 is calculated as a position at which the diameter of the oxidized ball is changed to the wire diameter. Next, at step S5, a wire center position 20 at the lower end position 19 of the tip 10 is calculated.

Next, the operation proceeds to step S6. In this case, since the wire center position 20 at the lower end position 19 of the tip 10, the wire center position 18 of the melted oxidized ball 17, and the outer diameter dimension of the melted oxidized ball 17 are detected, a projected length from the lower end position 19 of the tip 10 to a lower end edge 21 of the melted oxidized ball 17 can be calculated. Thereafter, the operation proceeds to step S7 and calculates a displacement position K1 of the wire front end at the extension plane (Ex plane) L2. That is, the displacement position K1 constituting an intersection of the linear line L1 connecting the front end center of the tip 10 and the wire front end (specifically, the linear line L1 three-dimensionally connecting the wire center position 20 at the lower end position 19 of the tip 10 and the wire center position 18 at the upper end position of the melted oxidized ball 17) and the extension plane L2 is calculated as X, Y, Z coordinate values. Further, the operation proceeds to step S8 and calculates a dimension (distance) between the imaginary aiming position K and the displacement position K1 as a wire displacement (deviation amount) C.

Thereafter, the operation proceeds to step S9 and transmits (registers) the wire displacement C to the correcting means 15 (means included in the robot control means) as a corrected amount of the tool registration value. In this case, the wire displacement C is a displacement relative to the reference value (tool registration value) of the imaginary aiming position K. Further, the reference value of the imaginary aiming position K can be calculated by using a needle for calibrating the torch position. The torch position calibrating needle is a needle simulating the position of the front end of the wire extended straight from the tip front end and the front end of the needle constitutes the imaginary aiming position K. Further, the needle is projected from the tip front end by a predetermined amount (extension amount B). Further, the tool registration value is calculated in real time after measuring the wire front end position, the wire displacement C is inputted to the welding robot 16 (robot control means), the arm of the robot 16 is corrected along the extension plane L2 by the displacement, and the welding wire W can accurately be fed to an aiming position (welding position) of the welded member 14. Further, the imaginary aiming position K can be calculated by using a new wire or the like by updating the tip 10.

According to the wire aiming position control method using the wire aiming position control apparatus, the imaginary aiming position K can be calculated by the first operating means 11 (in this case, calculated by using the calibrating needle), by the second operating means 12, the intersection K1 (the intersection of the linear line L1 connecting the front end center of the tip 10 and the wire front end and the extension plane L2) and the wire displacement C constituting the distance to the imaginary aiming position K can be calculated, further, by the correcting means 15, the position of feeding the welding wire W can be corrected by the calculated amount of the wire displacement C. Therefore, the wire displacement C is an accurate displacement of the front end position of the welding wire W and by correcting the position of feeding the welding wire W by the amount of the wire displacement C, the welding wire W can accurately be fed to the aiming position (welding position) of the welded member 14.

That is, the twisted amount of the welding wire w can be measured even when the twisted amount is changed for packing or in passing a guide conduit, and a deformation amount at the wire front end position can accurately be calculated. Therefore, the welding wire W can accurately be fed to the aiming position of the welded member 14 regardless of a change in the twisted amount of the wire. In this way, according to the wire aiming position control method using the wire aiming position control apparatus, the welding wire W can accurately be fed to the aiming position of the welded member 14, and a welded portion can be maintained constant even in thin plate welding or the like. As a result, a stable bonding strength can be ensured and quality of the welded portion can be stabilized. Further, since two points of the front end center of the tip 10 and the wire front end are detected, detection thereof and calculation of the displacement can be carried out in a short period of time and a time period of the welding operation can be shortened. Further, since the imaginary aiming position K is determined as the position of the front end of the calibrating needle mounted to the torch 9, the wire displacement can simply and highly accurately be calculated and a stable and highly accurate welded portion can be formed.

Further, since the wire front end is made to constitute the wire center position 18 at the upper end position of the melted oxidized ball 17, the wire displacement can accurately be calculated, and the welding wire W can further accurately be fed to the aiming position. That is, the melted oxidized ball 17 welded at the wire front end is not necessarily melted to attach to the wire center and therefore, when the melted oxidized ball 17 is taken into consideration, there is a possibility that the melted oxidized ball 17 is deviated from the aiming position and therefore, the wire displacement C is calculated by using the wire center position 18 at the upper end position of the melted oxidized ball 17. Therefore, even when the melted oxidized ball 17 is present, the welding wire W can accurately be fed to the aiming position of the welded member 14. Further, the displacement C at the front end position of the welding wire W is calculated (operated) from the wire center position at the tip front end position and therefore, even when a diameter of a front end hole of the tip 10 is worn, accurate correction can be carried out. Further, the front end center of the tip 10 is made to constitute the wire center position at the lower end position 19 of the tip 10 and therefore, the front end center of the tip 10 can accurately be determined, the wire displacement C can accurately be calculated, and the welding wire w can further accurately be fed to the aiming position. Further, the extension plane L2 is orthogonal to the center line L of the tip 10 and therefore, even when the displacement is corrected, an extension amount of the welding wire W projected from the tip 10 can be made to be substantially constant to achieve an advantage of capable of efficiently carrying out stable welding operation.

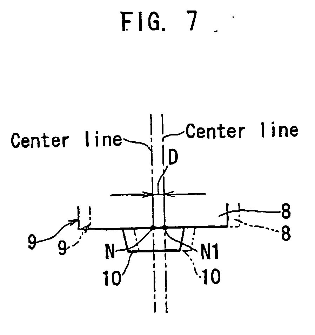

Meanwhile, there is a case in which the torch 9 is deformed by being interfered with a welded member, a fixed jig or the like. In such a case, a reference position of the nozzle 8 when the nozzle 8 is instructed to be disposed at a specific position under a state in which the torch 9 is accurately attached to a predetermined position of the arm of the welding robot 16 and a current position of the nozzle 8 which is instructed to be disposed at a position similarly are shifted from each other. Under the state, the nozzle 8 is not present at an instructed position and therefore, the welding position is shifted from the imaginary aiming position K. Therefore, by calculating a torch position displacement D (refer to FIG. 7), even when the torch 9 is deformed, the aiming position of the torch 9 can accurately be ensured.

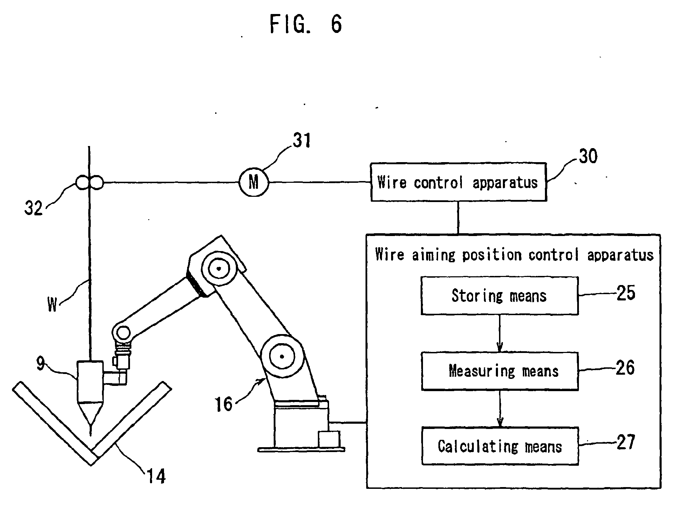

That is, as shown by FIG. 6, a wire aiming position control apparatus in this case is provided with storing means 25 for storing the reference position of the nozzle 8 when the nozzle 8 is instructed to be disposed at the specific position under the state in which the torch 9 is accurately attached to the predetermined position of the arm of the welding robot 16, and measuring means 26 for measuring the current position of the nozzle 8 which is instructed to be disposed at the position similarly, and by operating means 27, the torch position displacement D is calculated based on the reference position stored to the storing means 25 and the measured position measured by the measuring means 26. Further, the respective positions are determined as positions on the torch center line at the lower end position of the nozzle 8.

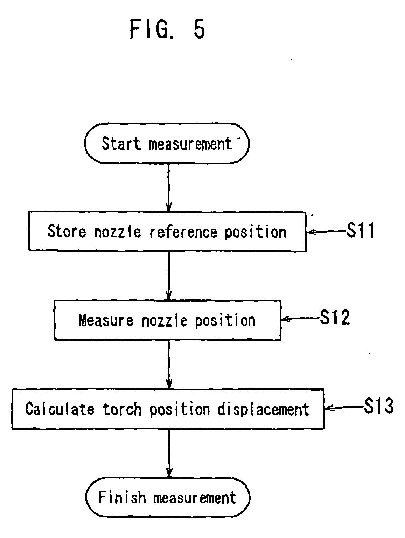

Calculation of the position of the torch 9 in this case is carried out in accordance with a flowchart shown in FIG. 5. That is, as shown by step S11, the reference position of the nozzle 8 is stored. Specifically, the lower end position of the nozzle 8 on the torch center line is stored when specific position instruction is outputted from control means (not illustrated) (as mentioned later, when instruction constituting a position at which the position of the torch 9 can be measured by the measuring means 26 is outputted) under a state in which the torch 9 is accurately attached to the predetermined position of the arm of the welding robot 16. Reference position master data is constituted by constituting the lower end position as the reference position. According to the step, measurement is carried out before starting the operation or in daily check to preserve (store) the lower end position as the master data. Next, the operation proceeds to step S12 and the position of the nozzle 8 is measured as shown by FIG. 7. In this case, the lower end position of the nozzle 8 on the torch center line is measured by the measuring means 26 (means constituted by the wire front end position measuring means 1). Thereafter, the operation proceeds to step S13 and compares the reference position master data (the reference position stored by the storing means 25) and the measured position measured by the measuring means 26 and calculates the torch position displacement D (refer to FIG. 7) which is a deviation of N1 constituting a measured position from N constituting the reference position in three axes (X, Y, Z axes orthogonal to each other) directions. In this case, although in FIG. 7, the torch position displacement D is illustrated as a two-dimensional deviation amount, actually, as described above, a three-dimensional deviation amount can be calculated. Further, a threshold (a threshold of the torch position displacement D) within a range of capable of ensuring the aiming position of the torch 9 can be set.

In this way, by calculating the torch position displacement D, a current positional shift of the nozzle 8 relative to the reference position of the nozzle 8 when the nozzle 8 is instructed to be disposed at a specific position can be calculated. Therefore, after correcting by the torch position displacement D, the wire displacement is calculated. That is, in a case of producing the positional shift of the torch 9, when the wire displacement C is calculated while the torch position displacement D is not corrected, the wire displacement C becomes an inaccurate displacement relative to the imaginary aiming position K. Therefore, when the wire displacement C is calculated after correcting the torch position displacement D, even when the tip or the like is deformed by being interfered with a welded member, a fixed jig or the like, a welding condition including a torch angle can accurately be reproduced, the aiming position of the torch can accurately be ensured even in thin plate welding and stable welding quality can be ensured.

Although an explanation has been given of the specific embodiments of the invention, the invention is not limited to the embodiments but can be embodied by being variously modified within the range of the invention as defined by the claims. For example, although according to the embodiment, the pair of laser sensors 2, 3 are used as the wire front end position measuring means 1, the wire front end position measuring means 1 is not limited to the pair of sensors but may be constituted by a single sensor or a pair or more of sensors. When the sensors are increased, accuracy of measuring the position can be promoted. Further, another position detecting sensor may be used as the wire front end position measuring means 1. Further, although according to the embodiment, a description has been given of the case of forming the melted oxidized ball 17, even when the melted oxidized ball 17 is not present, the wire displacement C on the extension plane L2 can be calculated. That is, even when the melted oxidized ball 17 is not present, the welding wire W can accurately be fed to the aiming position of the welded member 14. Further, although the wire front end for determining the linear line L1 is the wire center position 18 at the upper end position of the melted oxidized ball 17 according to the embodiment, the invention is not limited thereto but the wire front end may be constituted by a specified portion of the melted oxidized ball 17. Further, although according to the embodiment, the extension plane L2 is orthogonal to the center line L of the tip 10, the extension plane L2 may not naturally be orthogonal thereto and can arbitrarily be set. Further, although according to the embodiment, the imaginary aiming position K is constituted by the front end position of the calibrating needle mounted to the torch 9, the imaginary aiming position K may be constituted by a calculated position calculated by calculating a point disposed on the center line L of the tip 10 at a predetermined position from the tip 10 without using the calibrating needle. Further, although according to the embodiment, the arm of the welding robot 16, that is, the welding wire W is connected in correcting, the welded member 14 may be corrected, or the welding wire and the welded member 14 may be corrected. That is, as a whole, the wire displacement C and the torch position displacement D may be absorbed. Further, in correcting the wire displacement C, the welding wire W or the welded member 14 is moved along the extension plane L2, here, moving along the extension plane L2 includes not only a case of moving in parallel with the extension plane L2 but also a case of moving successively along X axis, Y axis, Z axis orthogonal to each other. That is, in the case of correcting, the welding wire W or the welded member 14 may be moved in steps. Further, in calculating the torch position displacement D, according to the embodiment, the reference position of the nozzle 8 and the current position of the nozzle 8 are compared, not only the nozzle 8 but also the tip 10 may be used therefor.

Hence, the wire aiming position control method of the invention comprises the steps of calculating the intersection K1 of the linear line L1 connecting the front end center of the tip 10 and the wire front end and the extension plane L2 including the imaginary aiming position K, calculating the wire displacement C constituting the distance between the intersection K1 and the imaginary aiming position K, and feeding the welding wire W to the imaginary aiming position K by correcting at least one of the welding wire W and the welded member 14 by the amount of the wire displacement C along the extension plane L2.

According to the wire aiming position control method, the wire displacement constituting the distance between the intersection and the imaginary aiming position can be calculated by calculating the intersection of the linear line connecting the front end center of the tip and the wire front end and the extension plane including the imaginary aiming position. The wire displacement is the accurate displacement of the front end position of the welding wire and by correcting by the amount of the displacement, the welding wire can accurately be fed to the aiming position (welding position) of the welded member. That is, even when the twisted amount of the welding wire is changed for packing or in passing a guided conduit, the twisted amount can be predicted and the wire displacement can accurately be calculated. Therefore, the welding wire can accurately be fed to the aiming position of the welded member regardless of the change in the wire twisting amount. In this way, according to the wire aiming position control method, the welding wire can accurately be fed to the aiming position of the welded member and the welded portion _ can be maintained constant even in thin plate welding or the like. As a result, the stable bonding strength can be ensured and the quality of the welded portion can be stabilized. Further, since two points of the front end center of the tip and the wire front end are detected, the detection and the calculation of the displacement can be carried out in the short period of time and the time period of the welding operation can be shortened.

According to the wire aiming position control method, when the extension plane L2 is orthogonal to the center line L of the tip 10, the extension plane is orthogonal to the center line of the tip and therefore, even when the displacement is corrected, the extension amount of the welding wire projected from the tip can substantially be made to be constant and the stable welding operation can efficiently be carried out.

According to the wire aiming position control method, when the imaginary aiming position is determined as the front end portion of the calibrating needle mounted to the torch 9, the imaginary aiming position is determined as the front end position of the calibrating needle mounted to the torch 9 and therefore, the wire displacement can simply and highly accurately be calculated and the stable highly accurate welded portion can be formed.

According to the wire aiming position control method, when the wire front end is made to be disposed at the wire center position 18 at the upper end position of the melted oxidized ball 17, the wire front end is made to be disposed at the wire center position at the upper end position of the melted oxidized ball and therefore, the wire displacement can accurately be calculated and the welding wire can further accurately be fed to the aiming position. That is, the melted oxidized ball welded at the wire front end is not necessarily be melted to be attached to the wire center and therefore, when the melted oxidized ball is taken into consideration, there is a possibility of deviating the melted oxidized ball from the aiming position and therefore, the wire displacement is calculated by using the upper end position of the melted oxidized ball. Therefore, even when the melted oxidized ball is present, the welding wire can accurately be fed to the aiming position of the melted member.

According to the wire aiming position control method, when the front end center of the tip 10 is disposed at the wire center position 20 at the lower end position 19 of the tip 10, the front end center of the tip is disposed at the wire center position at the lower end position of the tip and therefore, the front end center of the tip can accurately be determined, the wire displacement can accurately be calculated, and the welding wire can further accurately be fed to the aiming position.

According to the wire aiming position control method, there is a case in which the wire displacement C is calculated after correcting the torch position by the amount of the torch position displacement D by calculating the torch position displacement D by storing the reference position of the torch 9 when the torch 9 is instructed to be disposed at the specific position under the state in which the torch 9 is accurately attached to the predetermined position of the arm of the welding robot 16, measuring the current position of the torch 9 when instructed to be disposed at the position similarly, and calculating the torch position displacement D based on the reference position and the measured position. In this case, the torch position displacement constituting the current positional shift of the torch relative to the reference position of the torch can be calculated when the torch 9 is instructed to be disposed at the specific position under the state in which the torch is accurately attached to the predetermined position of the arm of the welding robot. That is, in the case in which the positional shift of the torch is produced, when the wire displacement is calculated while the displacement of the torch position is not corrected, the wire displacement becomes the inaccurate displacement relative to the imaginary aiming position. Therefore, when the wire displacement is calculated after correcting the displacement of the torch position, even when the tip or the like is deformed by being interfered with a welded member, a fixed jig or the like, the welding condition including the torch angle can accurately be reproduced, the aiming position of the torch can accurately be ensured even in thin plate welding and the stable welding quality can be ensured.

According to the wire aiming position control method, when the reference position and the measured position of the torch 9 are determined as positions on the torch center line at the lower end position of the nozzle 8, the reference position and the measured position of the torch can be determined as the positions on the torch center line at the lower position of the nozzle and therefore, the displacement of the torch position can simply be calculated and reliability of calculating the displacement of the torch position is promoted.

The wire aiming position control apparatus of the invention comprises the first operating means 11 for operating the imaginary aiming position K constituting a predetermined position;
the second operating means 12 for calculating the intersection K1 of the linear line L1 connecting the front end center of the tip 10 and the wire front end and the extension plane L2 including the imaginary aiming position K and calculating the wire displacement C constituting the distance between the intersection K1 and the imaginary aiming position K; and
the correcting means 15 for correcting the position of feeding the welding wire W by moving at least one of the welding wire W and the welded member 14 along the extension plane L2 by the calculated amount of the wire displacement C.

According to the wire aiming position control apparatus of the invention, the imaginary aiming position of the predetermined position can be operated by the first operating means, further, by the second operating means, the wire displacement constituting the distance between the intersection (the intersection of the linear line connecting the front end center of the tip and the wire front end and the extension plane) and the imaginary aiming position, further, by the correcting means, the position of feeding the welding wire can be corrected by the calculated amount of the wire displacement. That is, the wire displacement is the accurate displacement of the front end position of the welding wire and by correcting the position by the amount of the wire displacement, the welding wire can accurately be fed to the aiming position of the welded member. Therefore, when the wire aiming position control apparatus is used, even when the twisted amount of the welding wire is changed for packing or in passing a guide conduit, the twisted amount can be measured, and the wire displacement can accurately be operated. Further, the welding wire can accurately be fed to the aiming position of the welded member and a melted depth of the welded portion can be maintained constant even in thin plate welding or the like. As a result, the stable bonding strength can be ensured, and the quality of the welded portion can be stabilized. Further, since two points of the front end center of the tip and the wire front end are detected, the detection and calculation of the displacement can be carried out in a short period of time and the time period of the welding operation can be shortened.

According to the wire aiming position control apparatus, when the extension plane L2 is orthogonal to the center line L of the tip 10, the extension plane is orthogonal to the center line of the tip and therefore, even when the displacement is corrected, the extension amount of the welding wire projected from the tip can be made to be substantially constant and the stable welding operation can efficiently be carried out.

According to the wire aiming position control apparatus, when the wire front end is made to constitute the wire center position 18 at the upper end position of the melted oxidized ball 17, the wire front end is made to constitute the wire center position at the upper end position of the melted oxidized ball and therefore, the wire front end can accurately be determined, the wire displacement can accurately be calculated, and the welding wire can further accurately be fed to the aiming position.

According to the wire aiming position control apparatus, when the front end center of the tip 10 is made to be disposed at the wire center position 20 at the lower end position 19 of the tip 10, the front end center of the tip is made to be disposed as the wire center position at the lower end position of the tip and therefore, the front end center of the tip can accurately be determined, the wire displacement can accurately be calculated and the welding wire can further accurately be fed to the aiming position.

There is a case in which the wire aiming position control apparatus is provided with the storing means 25 for storing the reference position of the torch 9 when the torch 9 is instructed to be disposed at the specific position under the state in which the torch 9 is accurately attached to the predetermined position of the arm of the welding robot 16, the measuring means 26 for measuring the current position of the torch 9 when the torch 9 is instructed to be disposed at the position similarly, and the operating means 27 for calculating the torch position displacement D based on the reference position stored by the storing means 25 and the measured position measured by the measuring means 26. In this case, the reference position of the torch can be stored by the storing means when the torch is instructed to be disposed at the specific position under the state in which the torch is accurately attached to the predetermined position of the arm of the welding robot. The current position of the torch when instructed to be disposed at the specific position can be measured by the measuring means. The torch position displacement can be calculated based on the reference position stored by the storing means and the measured position measured by the measuring means. That is, in the case in which the positional shift of the torch is produced, when the wire displacement is calculated while the displacement of the torch position is not corrected, the wire displacement becomes the inaccurate displacement relative to the imaginary aiming position. Therefore, when the wire displacement is calculated after correcting the displacement of the torch position, even when the tip or the like is deformed by being interfered with a welded member, a fixed jig or the like, the welding condition including the torch angle can accurately be reproduced, the aiming position of the torch can accurately be ensured even in thin plate welding and the stable welding quality can be ensured.

According to the wire aiming position control apparatus, when the reference position and the measured position of the torch 9 are determined as positions on the torch center line at the lower end position of the nozzle 8, the reference position and the measured position of the torch are determined as positions on the torch center line at the lower end position of the nozzle and therefore, the displacement of the torch position can simply be calculated and reliability of calculating the displacement of the torch position is promoted.

## Claims

1. A wire aiming position control method comprising the steps of calculating an intersection (K1) of a linear line (L1) connecting a front end center of a tip (10) and a wire front end and an extension plane (L2) including an imaginary aiming position (K) disposed at a predetermined position, calculating a wire displacement (C) constituting a distance between the intersection (K1) and the imaginary aiming position (K), and correcting at least either one of the welding wire (W) and a welded member (14) by an amount of the wire displacement (C) along the extension plane (L2),
wherein the extension plane (L2) is orthogonal to a center line (L) of the tip (10), the imaginary aiming position (K) is determined as a front end position of a calibrating needle mounted to a torch (9) , the wire front end is made to constitute a wire center position (18) at an upper end position of a melted oxidized ball (17) and the front end center of the tip (10) is made to constitute a wire center position (20) at a lower end position (19) of the tip (10).

2. The wire aiming position control method according to Claim 1, further comprising the steps of storing a reference position of a torch (9) when the torch (9) is instructed to be disposed at a specific position under a state in which the torch (9) is accurately attached to a predetermined position of an arm of a welding robot (16) , measuring a current position of the torch (9) when the torch (9) is instructed to be disposed at the position similarly, calculating a torch position displacement (D) based on the reference position and a measured position, correcting a torch position by an amount of the torch position displacement (D) and thereafter calculating the wire displacement (C).

3. The wire aiming position control method according to Claim 2, wherein the reference position and the measured position of the torch (9) are determined as positions on a torch center line at a lower end position of a nozzle (8).

4. A wire aiming position control apparatus comprising:
first operating means (11) for operating an imaginary aiming position (K) constituting a predetermined position;
second operating means (12) for calculating an intersection (K1) of a linear line (L1) connecting a front end center of a tip (10) and a wire front end and an extension plane (L2) including the imaginary aiming position (K) and calculating a wire displacement (C) constituting a distance between the intersection (K1) and the imaginary aiming position (K); and
correcting means (15) for correcting a feeding position of a welding wire (W) by moving at least one of the welding wire (W) and a welded member (14) by a calculated amount of the wire displacement (C) along the extension plane (L2),
wherein the extension plane (L2) is orthogonal to a center line (L) of the tip (10),
the wire front end is made to constitute a wire center position (18) at an upper end position of a melted oxidized ball (17) and
wherein a front end center of the tip (10) is made to constitute a wire center position (20) at a lower end position (19) of the tip (10).

5. The wire aiming position control apparatus according to Claim 4, further comprising:
storing means (25) for storing a reference position of a torch (9) when the torch (9) is instructed to be disposed at a specific position under a state in which the torch (9) is accurately attached to a predetermined position of an arm of a welding robot (16);
measuring means (26) for measuring a current position of the torch (9) when the torch (9) is instructed to be disposed at the position similarly; and
operating means (27) for calculating a torch position displacement (D) based on the reference position stored by the storing means (25) and a measured position measured by the measuring means (26).

6. The wire aiming position control apparatus according to Claim 5, wherein the reference position and the measured position of the torch (9) are determined as positions on a torch center line at a lower end position of the nozzle (8).

## Patentansprüche

1. Verfahren zur Steuerung der Zielposition eines Drahts, welches folgende Schritte umfasst: das Berechnen einer Schnittstelle (K1) einer geraden Linie (L1), welche eine vorderes Endmittelteil einer Spitze (10) und ein vorderes Drahtende verbindet, und einer Erstreckungsebene (L2), welche eine imaginäre, an einer vorbestimmten Position angeordnete Zielposition (K) umfasst, das Berechnen einer einen Abstand zwischen der Schnittstelle (K1) und der imaginären Zielposition (K) darstellenden Drahtverschiebung (C) und das Korrigieren von mindestens einem von: dem Schweißdraht (W) und einem Schweißelement (14) um einen Betrag der Drahtverschiebung (C) entlang der Erstreckungsebene (L2),
wobei die Erstreckungsebene (L2) orthogonal zu einer Mittellinie (L) der Spitze (10) ist, die imaginäre Zielposition (K) als eine vordere Endposition einer auf einem Schweißbrenner (9) angeordneten Kalibriernadel ermittelt wird, das vordere Drahtende so ausgeführt ist, dass es eine Drahtmittenposition (18) an einer oberen Endposition einer geschmolzenen oxidierten Kugel (17) darstellt, und das vordere Endmittelteil der Spitze (10) so ausgeführt ist, dass es eine Drahtmittenposition (20) an einer unteren Endposition (19) der Spitze (10) darstellt.

2. Verfahren zur Steuerung der Zielposition eines Drahts nach Anspruch 1, welches weiterhin die Schritte des Speicherns einer Bezugsposition eines Schweißbrenners (9), wenn der Schweißbrenner (9) angewiesen ist, an einer spezifischen Position in einem Zustand angeordnet zu sein, in dem der Schweißbrenner (9) genau an einer vorbestimmten Position eines Arms eines Schweißroboters (16) angebracht ist, des Messens einer aktuellen Position des Schweißbrenners (9), wenn der Schweißbrenner (9) angewiesen ist, ähnlich an der Position angeordnet zu sein, des Berechnens einer Schweißbrennerpositionsverschiebung (D) auf der Grundlage der Bezugsposition und einer gemessenen Position, des Korrigierens einer Schweißbrennerposition um einen Betrag der Schweißbrennerpositionsverschiebung (D) und danach des Berechnens der Drahtverschiebung (C) umfasst.

3. Verfahren zur Steuerung der Zielposition eines Drahts nach Anspruch 2, **dadurch gekennzeichnet, dass** die Bezugsposition und die gemessene Position des Schweißbrenners (9) als Positionen auf einer Schweißbrennermittellinie an einer unteren Endposition einer Düse (8) ermittelt werden.

4. Vorrichtung zur Steuerung der Zielposition eines Drahts, welche umfasst:
erste Betriebsmittel (11) zum Betreiben einer imaginären, eine vorbestimmte Position darstellenden Zielposition (K) ;
zweite Betriebsmittel (12) zum Berechnen einer Schnittstelle (K1) einer geraden Linie (L1), welche ein vorderes Endmittelteil einer Spitze (10) und ein vorderes Drahtende verbindet, und einer die imaginäre Zielposition (K) umfassenden Erstreckungsebene (L2) und Berechnen einer eine Entfernung zwischen der Schnittstelle (K1) und der imaginären Zielposition (K) darstellenden Drahtverschiebung (C); und
Korrekturmittel (15) zum Korrigieren einer Vorschubposition eines Schweißdrahts (W) durch Bewegen mindestens eines von: dem Schweißdraht (W) und einem Schweißelement (14) um einen berechneten Betrag der Drahtverschiebung (C) entlang der Erstreckungsebene (L2),
wobei die Erstreckungsebene (L2) orthogonal zu einer Mittellinie (L) der Spitze (10) ist,
das vordere Drahtende so ausgeführt ist, dass es eine Drahtmittenposition (18) an einer oberen Endposition einer geschmolzenen oxidierten Kugel (17) darstellt; und
wobei ein vorderes Endmittelteil der Spitze (10) so ausgeführt ist, dass es eine Drahtmittenposition (20) an einer unteren Endposition (19) der Spitze (10) darstellt.

5. Vorrichtung zur Steuerung der Zielposition eines Drahts nach Anspruch 4, welche weiterhin umfasst:
Speichermittel (25) zum Speichern einer Bezugsposition eines Schweißbrenners (9), wenn der Schweißbrenner (9) angewiesen ist, an einer spezifischen Position in einem Zustand angeordnet zu sein, in dem der Schweißbrenner (9) genau an einer vorbestimmten Position eines Arms eines Schweißroboters (16) angebracht ist;
Messmittel (26) zum Messen einer aktuellen Position des Schweißbrenners (9), wenn der Schweißbrenner (9) angewiesen ist, ähnlich an der Position angeordnet zu sein; und
Betriebsmittel (27) zum Berechnen einer Schweißbrennerpositionsverschiebung (D) auf der Grundlage der durch das Speichermittel (25) gespeicherten Bezugsposition und einer von dem Messmittel (26) gemessenen Position.

6. Vorrichtung zur Steuerung der Zielposition eines Drahts nach Anspruch 5, **dadurch gekennzeichnet, dass** die Bezugsposition und die gemessene Position des Schweißbrenners (9) als Positionen auf einer Schweißbrennermittellinie an einer unteren Endposition der Düse (8) ermittelt sind.

## Revendications

1. Procédé de commande de position de pointage de fil comprenant les étapes consistant à calculer une intersection (K1) d'une droite (L1) reliant un centre d'extrémité avant d'une pointe (10) et une extrémité avant de fil et d'un plan d'extension (L2) comprenant une position de pointage imaginaire (K) disposée à une position prédéterminée, calculer un déplacement de fil (C) constituant une distance entre l'intersection (K1) et la position de pointage imaginaire (K), et corriger au moins l'un ou l'autre du fil de soudure (W) et d'un élément soudé (14) d'une quantité du déplacement de fil (C) le long du plan d'extension (L2),
dans lequel le plan d'extension (L2) est orthogonal à une ligne médiane (L) de la pointe (10), la position de pointage imaginaire (K) est déterminée en tant que position d'extrémité avant d'une aiguille de calibrage montée sur un chalumeau (9), l'extrémité avant de fil est amenée à constituer une position centrale de fil (18) à une position d'extrémité supérieure d'une bille oxydée fondue (17) et le centre d'extrémité avant de la pointe (10) est amené à constituer une position centrale de fil (20) à une position d'extrémité inférieure (19) de la pointe (10).

2. Procédé de commande de position de pointage de fil selon la revendication 1, comprenant en outre les étapes consistant à mémoriser une position de référence d'un chalumeau (9) lorsque le chalumeau (9) est commandé pour être disposé à une position spécifique dans un état
dans lequel le chalumeau (9) est fixé avec précision à une position prédéterminée d'un bras d'un robot de soudage (16), mesurer une position actuelle du chalumeau (9) lorsque le chalumeau (9) est commandé pour être disposé à la position de manière similaire, calculer un déplacement de position de chalumeau (D) sur la base de la position de référence et d'une position mesurée, corriger une position de chalumeau d'une quantité du déplacement de position de chalumeau (D) et calculer ensuite le déplacement de fil (C).

3. Procédé de commande de position de pointage de fil selon la revendication 2, dans lequel la position de référence et la position mesurée du chalumeau (9) sont déterminées en tant que positions sur une ligne médiane de chalumeau à une position d'extrémité inférieure d'une buse (8).

4. Dispositif de commande de position de pointage de fil comprenant :
des premiers moyens d'opération (11) pour calculer une position de pointage imaginaire (K) constituant une position prédéterminée ;
des deuxièmes moyens d'opération (12) pour calculer une intersection (K1) d'une droite (L1) reliant un centre d'extrémité avant d'une pointe (10) et une extrémité avant de fil et d'un plan d'extension (L2) comprenant la position de pointage imaginaire (K) et calculer un déplacement de fil (C) constituant une distance entre l'intersection (K1) et la position de pointage imaginaire (K) ; et
des moyens de correction (15) pour corriger une position d'avance d'un fil de soudure (W) en déplaçant au moins l'un du fil de soudure (W) et d'un élément soudé (14) d'une quantité calculée du déplacement de fil (C) le long du plan d'extension (L2),
dans lequel le plan d'extension (L2) est orthogonal à une ligne médiane (L) de la pointe (10),
l'extrémité avant de fil est amenée à constituer une position de centre de fil (18) à une position d'extrémité supérieure d'une bille oxydée fondue (17), et
dans lequel un centre d'extrémité avant de la pointe (10) est amené à constituer une position centrale de fil (20) à une position d'extrémité inférieure (19) de la pointe (10).

5. Dispositif de commande de position de pointage de fil selon la revendication 4, comprenant en outre :
des moyens de mémorisation (25) pour mémoriser une position de référence d'un chalumeau (9) lorsque le chalumeau (9) est commandé pour être disposé à une position spécifique dans un état dans lequel le chalumeau (9) est fixé avec précision à une position prédéterminée d'un bras d'un robot de soudage (16) ;
des moyens de mesure (26) pour mesurer une position actuelle du chalumeau (9) lorsque le chalumeau (9) est commandé pour être disposé à la position de manière similaire ; et
des moyens d'opération (27) pour calculer un déplacement de position de chalumeau (D) sur la base de la position de référence mémorisée par les moyens de mémorisation (25) et d'une position mesurée qui est mesurée par les moyens de mesure (26).

6. Dispositif de commande de position de pointage de fil selon la revendication 5, dans lequel la position de référence et la position mesurée du chalumeau (9) sont déterminées en tant que positions sur une ligne médiane de chalumeau à une position d'extrémité inférieure de la buse (8).
